# FASCICULE DE BREVET EUROPEEN

(11) **EP 3 139 473 B1**
(45) Date de publication et mention de la délivrance du brevet: **17.11.2021**
(21) Numéro de dépôt: 16182087.3
(22) Date de dépôt: 29.07.2016
(51) Int. Cl.: H02K 1/30, H02K 11/01, H02K 11/215

(54) **MACHINE ELECTRIQUE TOURNANTE MUNIE DE MOYENS DE SUIVI AMELIORES DE LA POSITION ANGULAIRE DU ROTOR**
ELEKTRISCH UMLAUFENDE MASCHINE, DIE MIT VERBESSERTEN NACHVERFOLGUNGSMITTELN DER WINKELPOSITION DES ROTORS AUSGESTATTET IST
ROTATING ELECTRICAL MACHINE WITH IMPROVED MEANS FOR MONITORING THE ANGULAR POSITION OF THE ROTOR

(30) Priorité: 04.09.2015 FR 1558193
(43) Date de publication de la demande: 08.03.2017
(73) Titulaire: VALEO EQUIPEMENTS ELECTRIQUES MOTEUR, 94046 Créteil Cedex (FR)
(72) Inventeur: EL BARAKA, Khadija, 77700 SERRIS (FR); JUGOVIC, Svetislav, 91200 ATHIS-MONS (FR); RAKOTOVAO, Mamy, 94400 VITRY SUR SEINE (FR); DUBUC, Cyril, 77260 SEPT SORTS (FR)
(74) Mandataire: Novembre, Christophe Adelphe

(56) Documents cités:
- EP-A1- 1 177 611
- FR-A1- 2 925 787
- JP-A- 2005 168 264
- JP-A- 2010 136 602
- US-A1- 2005 121 987
- US-A1- 2005 206 253
- US-A1- 2014 070 672
- US-A1- 2014 091 649

## Description

### DOMAINE TECHNIQUE DE L'INVENTION

La présente invention porte sur une machine électrique tournante munie de moyens de suivi améliorés de la position angulaire du rotor. L'invention trouve une application particulièrement avantageuse avec les alternateurs pour véhicules automobiles, ainsi qu'avec les machines électriques tournantes de type moteur ou alterno-démarreurs. La machine électrique pourra également appartenir à un ensemble de transmission intégrant au moins un embrayage relié d'une part à un vilebrequin d'un moteur thermique et d'autre part à la boîte de vitesses du véhicule.

### ARRIERE PLAN TECHNOLOGIQUE

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur comme décrit dans le document EP0803962 ou d'un moteur électrique comme décrit dans le document EP0831580. La machine électrique comporte un support ou carter portant le stator. Ce support est configuré pour porter à rotation l'arbre par l'intermédiaire de roulements.

Cette machine électrique comporte notamment un support et, à l'intérieur de celui-ci, un rotor à griffes, solidaire en rotation de manière directe ou indirecte d'un arbre, et un stator, qui entoure le rotor avec présence d'un faible entrefer. Le rotor comporte une bobine et une paire de roues polaires composée d'une portion cylindrique portant la bobine du rotor, ainsi que de portions de disque s'étendant depuis les extrémités de la portion cylindrique. En outre, une pluralité de pôles magnétiques en forme de griffes s'étendent axialement depuis lesdites portions de disque de façon à recouvrir la bobine de rotor. Les griffes d'une roue polaire sont dirigées axialement vers l'autre roue polaire, la griffe d'une roue polaire pénétrant dans l'espace existant entre deux griffes voisines de l'autre roue polaire, de sorte que les griffes des roues polaires sont imbriquées les unes par rapport aux autres. La périphérie externe des griffes est d'orientation axiale et définit avec la périphérie interne du corps du stator l'entrefer entre le stator et le rotor. La périphérie interne des griffes est inclinée, les griffes étant moins épaisses à leur extrémité libre.

En variante, le rotor comporte un corps formé par un empilage de feuilles de tôles maintenues sous forme de paquet au moyen d'un système de fixation adapté, tel que des rivets traversant axialement le rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Le stator est constitué par un empilage de tôles minces formant une couronne, dont la face intérieure est pourvue d'encoches ouvertes vers l'intérieur recevant les bobinages des phases, généralement au nombre de trois ou six. Dans les stators d'alternateurs de ce genre, les types de bobinages les plus couramment utilisés sont, d'une part, les bobinages dits "concentriques" constitués par des bobines fermées sur elles-mêmes qui sont enroulées autour des dents du stator, et d'autre part, les bobinages du type dit "ondulé", qui sont connus par exemple par le document FR2483702.

Par ailleurs, la machine comporte des moyens de suivi de la position du rotor afin de pouvoir commander la machine de manière adaptée. Ces moyens de suivi comprennent une cible annulaire magnétique solidaire en rotation de l'arbre de la machine, et au moins un capteur fixe de type à effet Hall disposé à proximité de la cible. Sous l'effet de la rotation de la cible conjointement avec l'arbre, le champ magnétique reçu par le capteur varie. Le capteur est relié à un dispositif électronique de gestion et de commande, et transmet à celui-ci des signaux fonction des champs magnétiques reçus, ce dispositif traitant lesdits signaux pour en déduire la position angulaire ainsi que la vitesse du rotor.

Le document FR2884367 enseigne de réaliser la cible en plasto-aimant qui est matériau constitué de particules magnétiques à base de ferrite ou de terre rare dispersées dans une matrice en matière plastique. Toutefois, une telle réalisation est coûteuse, en particulier pour les machines de grand diamètre qui requièrent une grande quantité de matériau pour la réalisation de la cible. D'autre part, du point de vue du capteur il n'est pas possible de séparer le flux d'un champ magnétique de fonctionnement du rotor destiné à interagir avec le stator du flux émis par la cible plasto-aimant. Ainsi, un des problèmes de l'ensemble cible capteur du document FR2884367 peut être la perturbation électromagnétique du capteur par le flux de fonctionnement.

Le document US 2005/206253 A1 divulgue le préambule de la revendication 1.

### OBJET DE L'INVENTION

L'invention vise à remédier efficacement à ces inconvénients en proposant une machine électrique tournante selon la revendication 1.

Selon une caractéristique générale, le moyeu est interposé entre le flux magnétique de fonctionnement émis par le rotor et le flux magnétique émis par la cible de sorte qu'il permette un blindage magnétique isolant le capteur du flux de fonctionnement. On obtient ainsi une mesure de position plus précise. En effet, le capteur est isolé du flux du fonctionnement.

Selon d'autres caractéristiques prises individuellement ou en combinaison :
- le stator entoure le rotor qui émet ledit champ magnétique de fonctionnement sur sa surface externe en direction du stator.
- la face concave dudit moyeu correspond à une face interne du moyeu faisant face à l'axe de la machine. On peut ainsi loger le capteur et l'ensemble cible sans utiliser de place supplémentaire.
- l'ensemble cible comprend une coupelle et la cible est fixée sur le moyeu via ladite coupelle, ladite cible magnétique étant séparée dudit champ magnétique de fonctionnement par ladite coupelle. La coupelle se fixe sur le moyeu entre le moyeu et le capteur et permet d'isoler encore plus le capteur. Elle permet également un maintien sur le moyeu réalisé par l'intermédiaire d'une autre pièce que l'ensemble cible qui ne présente pas toujours les caractéristiques mécaniques pour un tel maintien.
- l'ensemble cible présentant une longueur axiale, ladite coupelle est configurée pour recouvrir toute la longueur axiale de la cible. La coupelle permet ainsi une isolation maximale du flux de fonctionnement
- l'ensemble de détection comporte un capteur à effet Hall de type linéaire.
- ledit ensemble de détection comporte trois capteurs de flux. La précision est ainsi améliorée.

Le porte capteur permet de positionner le capteur au plus prés de la cible pour permettre une bonne transmission du flux venant de la cible vers le capteur.
- la machine comprend des moyens de réglage de la position angulaire du capteur par rapport audit stator. On évite ainsi d'avoir à réaliser un réglage logiciel pour assurer un calage entre le rotor et le stator.
- le porte capteur comprend un trou oblong et est fixé un voile du support par l'intémédiaire d'un élement tubulaire de fixation coopérant avec ledit trou oblong, l'élément tubulaire en coopération avec le trou oblong formant lesdits moyens de réglage
- l'ensemble cible comporte un anneau magnétique réalisé dans un materiau de type plastoaimant.
- les secteurs magnétiques nord et sud sont équitablement répartis sur la circonférence de la cible magnétique.
- l'ensemble cible présente une forme d'anneau présentant une face interne tournée vers l'axe et une face externe tournée de l'autre coté, les faces internes et externes étant respectivement délimitées par deux cercles concentriques. Dans le cas où l'ensemble cible est composé de plusieurs pièces, par exemple un anneau entouré d'une coupelle, la face interne est constituée par la face interne d'une des pièces de l'ensemble, par exemple l'anneau tandis que ladite face externe est constituée par la face externe de l'autre pièce.
- tous les points de face interne de l'ensemble cible sont équidistants de l'axe de la machine.

L'invention sera mieux comprise à la lecture de la description qui suit et à l'examen des figures qui l'accompagnent. Ces figures ne sont données qu'à titre illustratif mais nullement limitatif de l'invention.

### BREVE DESCRIPTION DES FIGURES

La figure 1 est une vue en coupe longitudinale de la machine électrique tournante selon la présente invention intégrée à un ensemble de transmission;
La figure 2 est une vue en perspective du moyeu de la machine électrique illustrée sur la figure 1 ;
La figure 3 est une vue de dessus du moyeu de la machine électrique illustrée sur la figure 1 ;
La figure 4 montre une vue plus détaillé de la figure 1 selon la présente invention;
La figure 5 est une vue de l'ensemble cible selon la présente invention;
La figure 6 montre une vue en perspective du moyeu du rotor appartenant à la machine électrique selon la présente invention;
La figure 7 montre une vue en perspective du moyeu appartenant à la machine électrique et de l'ensemble cible;
La figure 8 montre une vue en perspective du moyeu du rotor appartenant à la machine électrique et comportant l'ensemble cible ainsi que un ensemble de détection selon la présente invention;
La figure 9 est une vue en perspective montrant les moyens de réglage angulaire de l'ensemble de détection selon la présente invention ; et
Les figures 10 et 11 sont des vues détaillées de l'ensemble cible et du capteur selon la présente invention.

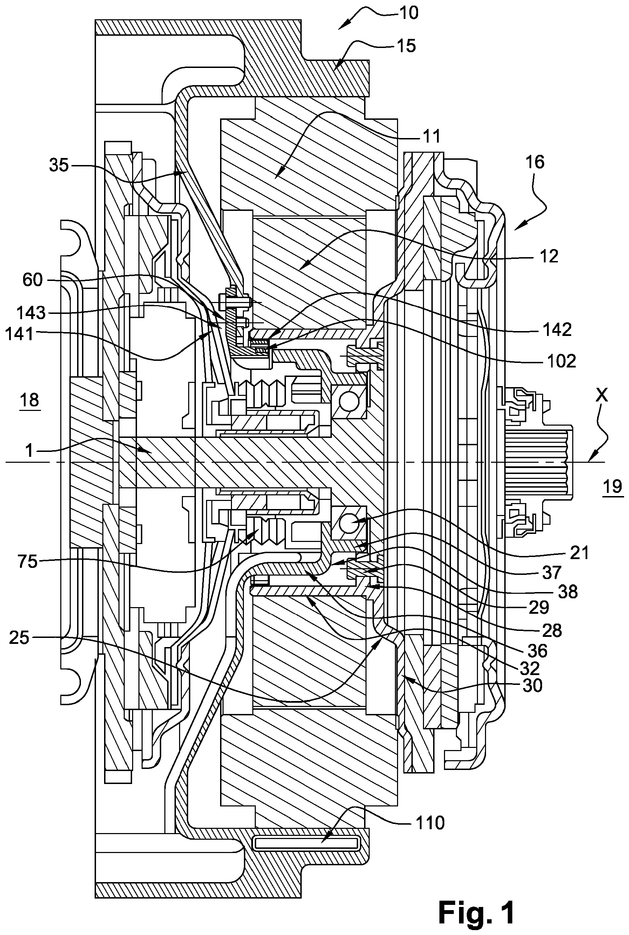

Les éléments identiques, similaires, ou analogues conservent la même référence d'une figure à l'autre. On utilisera une orientation axiale d'avant en arrière correspondant à une orientation de gauche à droite conformément à la figure 1.

### DESCRIPTION D'EXEMPLES DE REALISATION DE L'INVENTION

La figure 1 représente une machine 10 comportant un stator 11 polyphasé entourant un rotor 12 d'axe X lié en rotation avec un arbre 1. Le stator 11 est destiné à être porté par un support 15. Le stator 11 de la machine 10 entoure le rotor 12 avec présence d'un entrefer entre la périphérie interne du stator 11 et la périphérie externe du rotor 12.

Cette machine électrique 10 pourra appartenir à un ensemble de transmission comportant un embrayage 16 relié au vilebrequin d'un moteur thermique situé du côté de l'espace 18 et d'autre part à l'entrée d'une boîte de vitesses située du côté de l'espace 19. Le support 15 est configuré pour porter à rotation, via un roulement à billes 21, l'arbre 1 lié au rotor 12.

En l'occurrence, la machine 10 est une machine synchrone dont le rotor 12 est par exemple doté d'aimants permanents. Plus précisément, pour diminution des courants de Foucault, le rotor 12 comporte un corps sous la forme d'un paquet de tôles. Les aimants permanents pourront être implantés dans des ouvertures du paquet de tôles. Les aimants pourront être en terre rare ou en ferrite selon les applications et la puissance recherchée de la machine.

Par ailleurs, le stator 11 comporte un corps de forme annulaire d'axe confondu avec l'axe X. Ce corps présente des dents réparties régulièrement sur la périphérie interne délimitant deux à deux des encoches ouvertes vers l'intérieur. Le corps est formé par un empilement de tôles réalisées en matière ferromagnétique s'étendant dans un plan radial perpendiculaire à l'axe X. Le paquet de tôles est maintenu au moyen de rivets traversant axialement de part en part l'empilement des tôles.

On monte sur les dents les bobines préformées formant le bobinage du stator 11, par exemple de type concentrique. Ces bobines sont réalisées chacune à partir d'un fil enroulé sur plusieurs tours sur un isolant de bobine monté une dent du stator. Les fils consistent en un fil électriquement conducteur, par exemple en un fil de cuivre et/ou d'aluminium, revêtu d'un isolant électrique, tel que de l'émail. Les bobines sont interconnectées entre elles à l'aide d'un interconnecteur non représenté. Un tel stator 11 est décrit dans la demande de brevet FR12/55770 à laquelle on se reportera pour plus de précisions.

Le support 15 pourra être métallique. Il pourra être en matière moulable en étant par exemple en aluminium ou en un alliage à base d'aluminium. Le montage du corps du stator 11 dans le support 15 pourra être réalisé par frettage. De préférence, le support 15 comporte en outre un circuit de refroidissement 110, par exemple à eau, pour refroidir le stator 11.

Comme cela est montré à la figure 1, le support 15 comporte un voile interne 35 formant une paroi de séparation entre le rotor 12 et l'espace 18 situé du côté du moteur thermique. Ce voile 35 est ainsi décalé axialement par rapport à la face avant du support 15. Ainsi, le voile interne 35 permet d'éviter l'arrivée de poussières dans la machine électrique 10 issues notamment du frottement des éléments de friction de l'embrayage 16.

Ce voile interne 35 présente à son extrémité interne un premier 36 et un deuxième 37 manchon d'orientation axiale qui pénètrent à l'intérieur du rotor 12 via un jeu radial. Ces manchons 36, 37 sont traversés par l'arbre lié au moteur. Le manchon 37 qui s'étend le plus à l'intérieur du rotor 12 a un diamètre inférieur à celui du manchon 36. Ainsi, on peut monter le roulement à billes 21 entre le manchon interne 37 et l'arbre lié au moteur thermique. Les deux manchons 36, 37 s'étendent axialement de part et d'autre d'une paroi transversale 38 trouée de manière à pouvoir être traversée par l'arbre.

Le corps du rotor 12 réalisé par un corps sous la forme d'un paquet de tôles est monté sur un moyeu 25. Cet ensemble rapporté de tôles usinées est ensuite fretté sur une extrémité du moyeu 25 du rotor 12. Plus précisément, le moyeu 25 du rotor 12 est destiné à être fixé à une extrémité de l'arbre 1 lié au vilebrequin du moteur thermique. A cet effet, le moyeu 25 comporte un rebord interne 28 d'orientation sensiblement transversale muni d'ouvertures 29 autorisant le passage de moyens de fixation à l'arbre, tels que des rivets. Le moyeu 25 peut recevoir un ensemble cible 142.

La périphérie interne du corps du rotor 12 est montée sur la périphérie externe d'une portion cylindrique 32 du moyeu 25. Ce montage pourra être réalisé par frettage. En variante, la périphérie externe de la portion 32 du moyeu 25 est moletée et le paquet de tôles du rotor 12 est emmanché à force sur le moletage du moyeu 25. Dans tous les cas, le corps du rotor 12 est solidaire axialement et en rotation du moyeu 25. La machine 10 comporte une butée de débrayage 75 pour débrayer l'embrayage 16.

Selon un mode de réalisation, le moyeu 25 peut également comporter un rebord externe 30 issu d'un prolongement à l'arrière de la portion cylindrique 32 du moyeu 25 portant le rotor 12. Par exemple ce rebord externe peut être fixé à un disque de l'embrayage 16. Le rebord externe 30 est alors muni d'ouvertures 31 autorisant le passage de moyens de fixation au disque de l'embrayage, tels que des rivets.

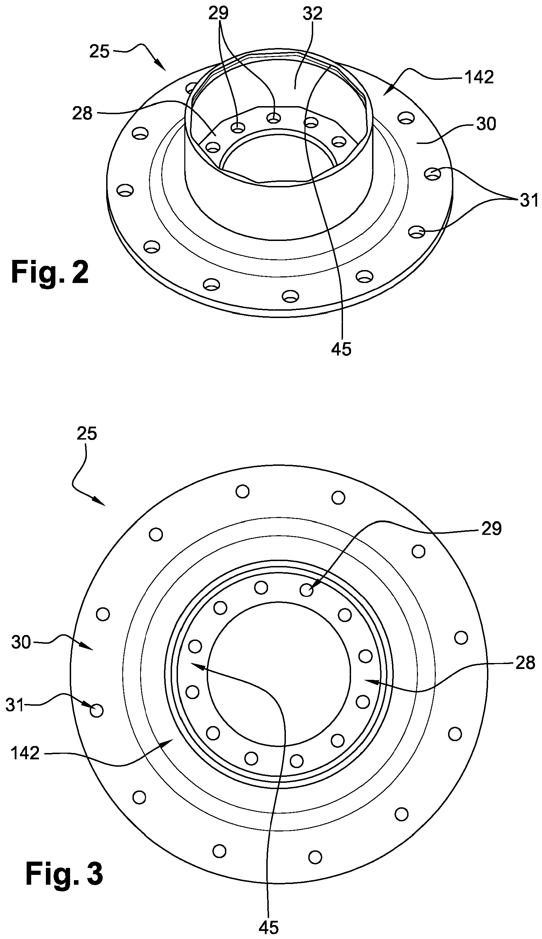

Le moyeu 25 muni de l'ensemble cible 142 ainsi que des rebords externe 30 et interne 28 troués respectivement par les ouvertures 31 et 29 est illustré plus en détail sur les figures 2 et 3.

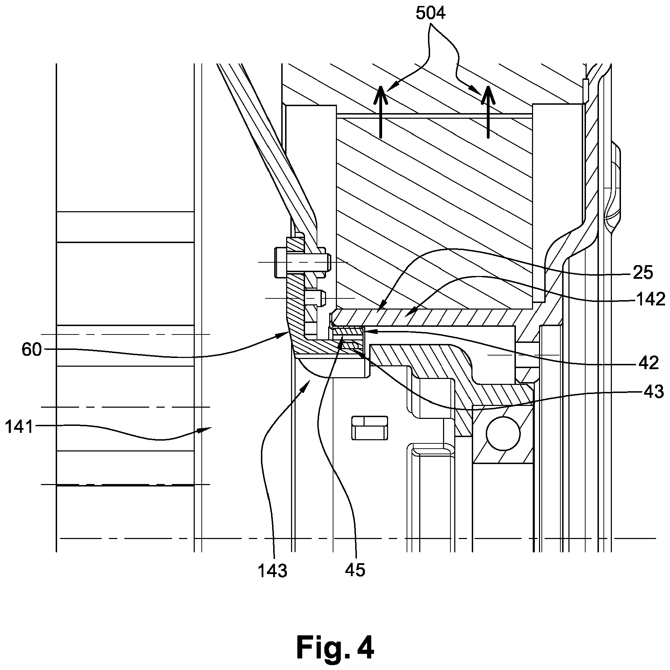

La machine électrique 10 comporte en outre des moyens de suivi 141 de la position angulaire du rotor 12 dont l'agencement est montré plus en détail aux figures 4, 9 et 10 notamment.

Ces moyens de suivi 141 comportent l'ensemble cible 142 liée en rotation avec le rotor 12, un ensemble de détection 143 comprenant un porte capteur 60 muni d'au moins un capteur 43. Par exemple un porte capteur 60 est muni de trois capteurs 43. Le capteur 43 est par exemple un capteur de flux magnétique constitué par exemple par un capteur à effet Hall de type linéaire. La cible 42 est par exemple réalisée en plastoaimant. Elle présente une face 45 interne tournée vers l'axe du rotor X.

Le ou les capteurs 43 sont positionnés en regard de la face interne 45 de la cible 42. Le ou les capteurs 43 sont reliés à un dispositif électronique (non représenté) de gestion et de commande. Ce dispositif traite les signaux pour en déduire la position angulaire ainsi que la vitesse du rotor 12.

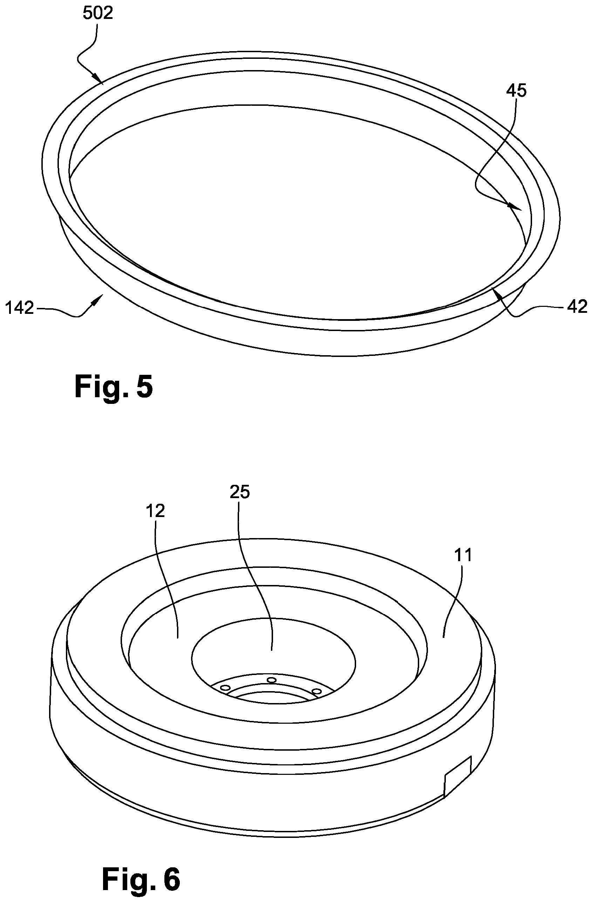

La figure 5 représente plus en détail l'ensemble cible 142 qui est de forme annulaire. Selon un mode de réalisation, l'ensemble cible comprend la cible et une coupelle 502. Selon ce mode de réalisation, la cible 42 est entourée sur sa face externe par la coupelle 502. Cette coupelle 502 permet l'installation de la cible sur le moyeu 25.

La figure 6 représente le stator 11 et le rotor 12 de la machine avant installation de l'ensemble cible 42. Le rotor est muni du moyeu 25.

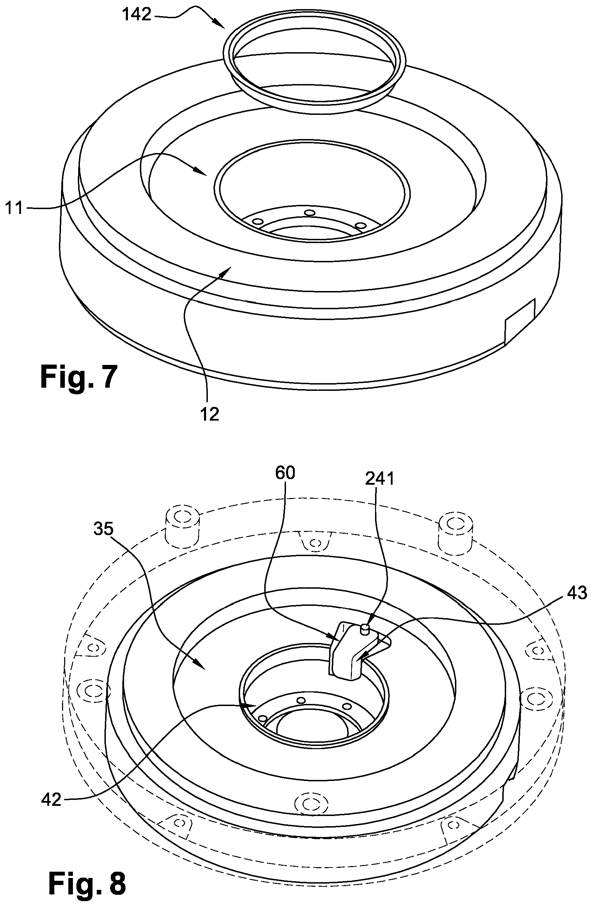

La figure 7 représente le stator 11 et le rotor 12 de la machine avec l'ensemble cible 142.

La figure 8 représente le stator et le rotor recouvert du voile 35 sur lequel est fixé l'ensemble de détection 143, le moyeu 25 du rotor étant muni de l'ensemble cible 142. L'ensemble de détection comprend le porte capteur 60 et le capteur 43, le porte capteur 60 portant le capteur 43. Selon un mode de réalisation, le porte capteur 60 est relié par une vis 241 au voile 35. Le porte capteur 60 est agencé de sorte que le capteur est en regard de la face interne 45 de la cible 42.

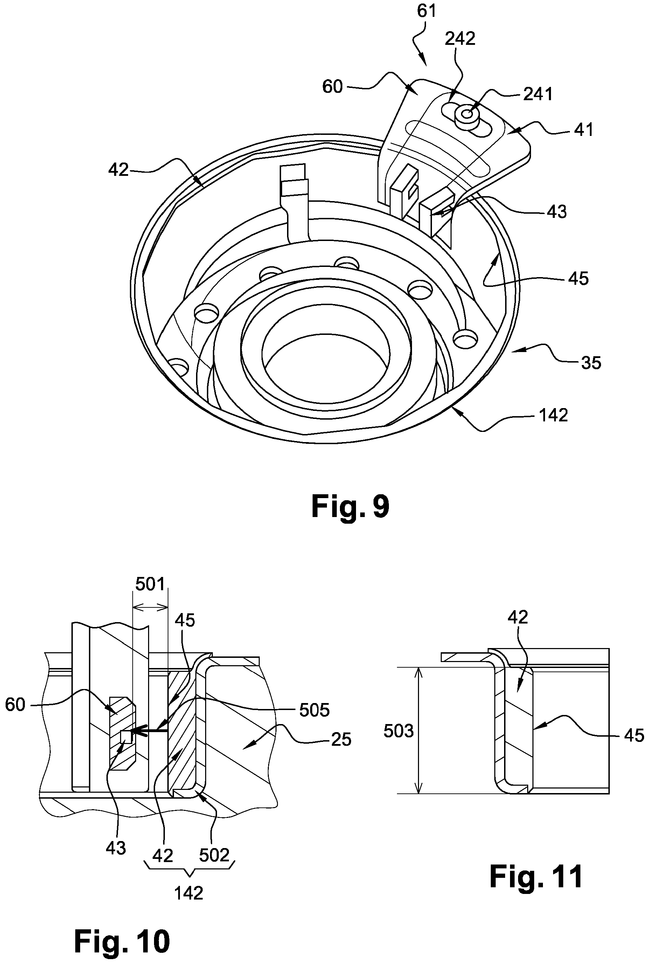

La figure 9 représente un détail du voile 35 sur lequel est fixé l'ensemble de détection 143. Comme on peut le voir le porte capteur 60 est relié par une vis 241 qui coopère avec un trou oblong 242 du porte cible. La vis 241 en coopération avec le trou oblong forme donc des moyens de réglage 61 de la position angulaire de l'ensemble de détection par rapport au stator. Ces moyens de réglage 61 permettent d'effectuer un positionnement angulaire sous contrôle du dispositif en face d'une dent du stator 11. On évite ainsi d'avoir à réaliser un réglage logiciel pour assurer un calage entre le rotor 12 et le stator 11.

Selon un mode de réalisation, le porte capteur 60 comprend deux capteurs afin d'obtenir une mesure redondante plus précise.

Selon un mode de réalisation, les moyens de détections comprennent au moins deux capteurs 43 décalés entre eux d'un angle électrique de 90 degrés. Cela permet d'améliorer la précision et la fiabilité de la mesure de position effectuée par le dispositif.

Selon un mode de réalisation, les moyens de détection comprennent deux capteurs 43 noyés dans un unique porte capteur 60 par exemple formé d'une pièce monobloc en plastique.

La figure 10 représente une coupe détaillée montrant une partie des moyens de suivi 141. Plus précisément, la figure 10 illustre le moyeu 25 sur lequel est agencée la coupelle de l'ensemble cible 142. La fixation entre la coupelle 502 et le moyeu 25 du rotor peut être réalisée par des rivets ou des vis. La figure 10 illustre également le capteur 43 en regard de la face interne 45 de la cible 42. Le capteur est éloigné d'une longueur 501 de la face interne 45. Cette longueur 501 correspond à l'entrefer magnétique entre le capteur 43 à effet hall et la cible 42 plastoaimant.

La figure 11 représente une coupe détaillée montrant l'ensemble cible 142 des moyens de suivi 141. Plus précisément, la figure 11 illustre une coupe selon laquelle on peut voir comment s'étend axialement la cible 42. Elle présente une longueur de lecture égale à 503. Par exemple la longueur de lecture 503 est sensiblement égale à deux fois la longueur 501.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (10) comprenant un support (15) et comportant:
- un stator (11) monté fixe par rapport au support,
- un rotor (12) monté sur un moyeu (25) rotatif par rapport à un axe (X) de la machine, ledit rotor étant configure pour émettre un flux magnétique de fonctionnement (504) destiné à interagir avec ledit stator (11),
- un dispositif de suivi (141) d'une position angulaire dudit rotor (12)
comportant:
- un ensemble cible (142) comprenant une cible (42) liée en rotation avec ledit rotor (12), et
- au moins un ensemble de détection (143) comprenant un capteur (43), ledit capteur (43) étant configuré pour capter le flux magnétique émis par ladite cible (42),
ledit moyeu (25) étant interposé entre le flux magnétique de fonctionnement (504) émis par le rotor (12) et le flux magnétique émis par la cible (505) de sorte qu'il permette un blindage magnétique isolant le capteur (43) du flux de fonctionnement (504)
**caractérisé en ce que** :
ledit ensemble cible (142) est fixé sur une face concave dudit moyeu (25) de sorte qu'une face interne (45) de la cible soit tournée vers l'axe et **en ce que**
ledit ensemble détection (143) comporte en outre un porte capteur (60) sur lequel est fixé le capteur (43), ledit porte capteur (60) étant fixé au support et s'étendant radialement entre une position externe et une position interne, ladite position interne étant plus proche de l'axe que la cible de sorte que le capteur (43) fait face à ladite face interne (45) de la cible (42).

2. Machine selon la revendication 1, **caractérisée en ce que** le stator entoure le rotor qui émet ledit champ magnétique de fonctionnement (504) sur sa surface externe en direction du stator.

3. Machine selon l'une quelconque des revendications précédentes, **caractérisée en ce que** la face concave dudit moyeu (25) correspond à une face interne du moyeu faisant face à l'axe de la machine.

4. Machine selon l'une quelconques des revendications précédentes, **caractérisée en ce que** l'ensemble cible (142) comprend une coupelle (502) et la cible est fixée sur le moyeu (25) via ladite coupelle, ladite cible magnétique étant séparée dudit champ magnétique de fonctionnement par ladite coupelle.

5. Machine selon l'une quelconque des revendications précédentes, **caractérisée en ce que** l'ensemble cible (142) présentant une longueur axiale, ladite coupelle (502) est configurée pour recouvrir toute la longueur axiale de la cible (42).

6. Machine selon l'une quelconque des revendications précédentes, **caractérisée en ce que** l'ensemble de détection (143) comporte un capteur a effet Hall de type linéaire.

7. Machine selon la revendication précédente, **caractérisée en ce que** ledit ensemble de détection (143) comporte trois capteurs de flux (43).

8. Machine selon l'une des revendications précédentes, **caractérisée en ce qu'**elle comprend des moyens de réglage (61) de la position angulaire du capteur (43) par rapport audit stator (11).

9. Machine selon la revendication 8, **caractérisée en ce que** le porte capteur comprend un trou oblong et est fixé sur un voile (35) du support par l'intermédiaire d'un élément tubulaire de fixation coopérant avec ledit trou oblong, l'élément tubulaire en coopération avec le trou oblong formant lesdits moyens de réglage (61).

10. Machine selon l'une quelconque des revendications précédentes, **caractérisée en ce que** l'ensemble cible (142) comporte un anneau magnétique réalise dans un matériau de type plastoaimant.

11. Machine électrique tournante selon l'une quelconque des revendications précédentes, **caractérisé en ce que** les secteurs magnétiques nord et sud sont équitablement répartis sur la circonférence de la cible (42) magnétique.

12. Machine électrique tournante selon l'une quelconque des revendications précédentes, **caractérisé en ce que** l'ensemble cible (142) présente une forme d'anneau présentant une face interne tournée vers l'axe et une face externe tournée de l'autre cote, les faces internes et externes étant respectivement délimitées par deux cercles concentriques.

13. Machine électrique tournante selon la revendication précédente, **caractérisé en ce que** tous les points de face interne de l'ensemble cible (142) sont équidistant de l'axe de la machine.

## Patentansprüche

1. Umlaufende elektrische Maschine (10), die eine Trägerplatte (15) enthält und aufweist:
- einen Stator (11), der bezüglich der Trägerplatte ortsfest montiert ist,
- einen Rotor (12), der auf eine bezüglich einer Achse (X) der Maschine drehbare Nabe (25) montiert ist, wobei der Rotor konfiguriert ist, einen Betriebsmagnetfluss (504) zu emittieren, der dazu bestimmt ist, mit dem Stator (11) zu interagieren,
- eine Verfolgungsvorrichtung (141) einer Winkelstellung des Rotors (12), die aufweist:
- eine Zieleinheit (142), die ein Ziel (42) enthält, das in Drehung mit dem Rotor (12) verbunden ist, und
- mindestens eine Erfassungseinheit (143), die einen Sensor (43) enthält, wobei der Sensor (43) konfiguriert ist, den vom Ziel (42) emittierten Magnetfluss aufzufangen,
wobei die Nabe (25) zwischen dem vom Rotor (12) emittierten Betriebsmagnetfluss (504) und dem vom Ziel emittierten Magnetfluss (505) eingefügt ist, so dass sie eine magnetische Abschirmung ermöglicht, die den Sensor (43) vom Betriebsfluss (504) isoliert,
**dadurch gekennzeichnet, dass**:
die Zieleinheit (142) auf einer konkaven Seite der Nabe (25) befestigt ist, so dass eine Innenseite (45) des Ziels zur Ache gerichtet ist, und dass
die Erfassungseinheit (143) außerdem einen Sensorträger (60) aufweist, an dem der Sensor (43) befestigt ist, wobei der Sensorträger (60) an der Trägerplatte befestigt ist und sich radial zwischen einer äußeren Stellung und
einer inneren Stellung erstreckt, wobei die innere Stellung der Achse näher ist als das Ziel, so dass der Sensor (43) der Innenseite (45) des Ziels (42) gegenüberliegt.

2. Maschine nach Anspruch 1, **dadurch gekennzeichnet, dass** der Stator den Rotor umgibt, der das Betriebsmagnetfeld (504) auf seiner Außenfläche in Richtung des Stators emittiert.

3. Maschine nach einem der vorhergehenden Ansprüche, **dadurch gekennzeichnet, dass** die konkave Seite der Nabe (25) einer Innenseite der Nabe entspricht, die der Achse der Maschine gegenüberliegt.

4. Maschine nach einem der vorhergehenden Ansprüche, **dadurch gekennzeichnet, dass** die Zieleinheit (142) einen Stützring (502) enthält, und das Ziel an der Nabe (25) über den Stützring befestigt ist, wobei das magnetische Ziel durch den Stützring vom Betriebsmagnetfeld getrennt ist.

5. Maschine nach einem der vorhergehenden Ansprüche, **dadurch gekennzeichnet, dass**, da die Zieleinheit (142) eine axiale Länge hat, der Stützring (502) konfiguriert ist, die ganze axiale Länge des Ziels (42) zu bedecken.

6. Maschine nach einem der vorhergehenden Ansprüche, **dadurch gekennzeichnet, dass** die Erfassungseinheit (143) einen Hall-Sensor vom linearen Typ aufweist.

7. Maschine nach dem vorhergehenden Anspruch, **dadurch gekennzeichnet, dass** die Erfassungseinheit (143) drei Flusssensoren (43) aufweist.

8. Maschine nach einem der vorhergehenden Ansprüche, **dadurch gekennzeichnet, dass** sie Einstelleinrichtungen (61) der Winkelstellung des Sensors (43) bezüglich des Stators (11) enthält.

9. Maschine nach Anspruch 8, **dadurch gekennzeichnet, dass** der Sensorträger ein Langloch enthält und an einer Abdeckung (35) der Trägerplatte mittels eines rohrförmigen Befestigungselements befestigt ist, das mit dem Langloch zusammenwirkt, wobei das rohrförmige Element in Zusammenwirkung mit dem Langloch die Einstelleinrichtungen (61) bildet.

10. Maschine nach einem der vorhergehenden Ansprüche, **dadurch gekennzeichnet, dass** die Zieleinheit (142) einen magnetischen Ring aufweist, der aus einem Material der Art Plastomagnet hergestellt ist.

11. Umlaufende elektrische Maschine nach einem der vorhergehenden Ansprüche, **dadurch gekennzeichnet, dass** Nord- und Süd-Magnetsektoren auf dem Umfang des Ziels (42) gleichmäßig verteilt sind.

12. Umlaufende elektrische Maschine nach einem der vorhergehenden Ansprüche, **dadurch gekennzeichnet, dass** die Zieleinheit (142) die Form eines Rings hat, der eine zur Achse weisende Innenseite und eine zur anderen Seite weisende Außenseite aufweist, wobei die Innen- und Außenseite je von zwei konzentrischen Kreisen begrenzt werden.

13. Umlaufende elektrische Maschine nach dem vorhergehenden Anspruch, **dadurch gekennzeichnet, dass** alle Punkte der Innenseite der Zieleinheit (142) den gleichen Abstand zur Achse der Maschine haben.

## Claims

1. Rotating electrical machine (10) having a support (15) and comprising:
- a stator (11) fixedly mounted with respect to the support,
- a rotor (12) mounted on a hub (25) that rotates with respect to an axis (X) of the machine, said rotor being configured to emit an operating magnetic flux (504) intended to interact with said stator (11),
- a device for tracking (141) an angular position of said rotor (12),
comprising:
- a target assembly (142) comprising a target (42) linked in rotation with said rotor (12), and
- at least one detection assembly (143) comprising a sensor (43), said sensor (43) being configured to pick up the magnetic flux emitted by said target (42),
said hub (25) being interposed between the operating magnetic flux (504) emitted by the rotor (12) and the magnetic flux emitted by the target (505) such that it allows a magnetic shield insulating the sensor (43) from the operating flux (504),
**characterized in that**:
said target assembly (142) is fixed on a concave face of said hub (25) such that an inner face (45) of the target is turned towards the axis and **in that** said detection assembly (143) further comprises a sensor-holder (60) to which the sensor (43) is fixed, said sensor-holder (60) being fixed to the support and extending radially between an outer position and an inner position, said inner position being closer to the axis than the target such that the sensor (43) faces said inner face (45) of the target (42).

2. Machine according to Claim 1, **characterized in that** the stator surrounds the rotor which emits said operating magnetic field (504) on its outer face towards the stator.

3. Machine according to either one of the preceding claims, **characterized in that** the concave face of said hub (25) corresponds to an inner face of the hub facing the axis of the machine.

4. Machine according to any one of the preceding claims, **characterized in that** the target assembly (142) comprises a cup (502) and the target is fixed to the hub (25) via said cup, said magnetic target being separated from said operating magnetic field by said cup.

5. Machine according to any one of the preceding claims, **characterized in that**, the target assembly (142) having an axial length, said cup (502) is configured to cover all the axial length of the target (42).

6. Machine according to any one of the preceding claims, **characterized in that** the detection assembly (143) comprises a Hall effect sensor of linear type.

7. Machine according to the preceding claim, **characterized in that** said detection assembly (143) comprises three flux sensors (43).

8. Machine according to one of the preceding claims, **characterized in that** it comprises means (61) for adjusting the angular position of the sensor (43) with respect to said stator (11).

9. Machine according to Claim 8, **characterized in that** the sensor-holder has an oblong hole and is fixed onto a web (35) of the support via a tubular fixing element cooperating with said oblong hole, the tubular element in cooperation with the oblong hole forming said setting adjusting means (61).

10. Machine according to any one of the preceding claims, **characterized in that** the target assembly (142) comprises a magnetic ring produced in a material of magnetic plastic type.

11. Rotating electrical machine according to any one of the preceding claims, **characterized in that** the north and south magnetic sectors are evenly distributed over the circumference of the magnetic target (42) .

12. Rotating electrical machine according to any one of the preceding claims, **characterized in that** the target assembly (142) has a ring form having an inner face turned towards the axis and an outer face turned to the other side, the inner and outer faces being, respectively, delimited by two concentric circles.

13. Rotating electrical machine according to the preceding claim, **characterized in that** all the inner face points of the target assembly (142) are equidistant from the axis of the machine.
